(19) Europäisches Patentamt / European Patent Office / Office européen des brevets

(11) **EP 1 433 282 B1**

(12) **FASCICULE DE BREVET EUROPEEN**

(45) Date de publication et mention de la délivrance du brevet:
**15.08.2007 Bulletin 2007/33**

(21) Numéro de dépôt: **02774904.3**

(22) Date de dépôt: **05.09.2002**

(51) Int Cl.:
**H04L 9/30** (2006.01)

(86) Numéro de dépôt international:
**PCT/FR2002/003021**

(87) Numéro de publication internationale:
**WO 2003/028286 (03.04.2003 Gazette 2003/14)**

(54) **PROCEDE DE MISE EN OEUVRE, DANS UN COMPOSANT ELECTRONIQUE, D'UN ALGORITHME DE CRYPTOGRAPHIE PERMETTANT DE TROUVER L'EXPOSANT PUBLIC**

VERFAHREN ZUR IMPLEMENTIERUNG EINES KRYPTOGRAPHISCHEN ALGORITHMUS ZUM FINDEN DES ÖFFENTLICHEN EXPONENTEN IN EINER ELEKTRONISCHEN KOMPONENTE

METHOD FOR IMPLEMENTING IN AN ELECTRONIC COMPONENT A CRYPTOGRAPHIC ALGORITHM FOR FINDING THE PUBLIC EXPONENT

(84) Etats contractants désignés:
**DE FI FR GB IT SE**

(30) Priorité: **24.09.2001 FR 0112274**

(43) Date de publication de la demande:
**30.06.2004 Bulletin 2004/27**

(73) Titulaire: **GEMPLUS**
**13420 Gémenos (FR)**

(72) Inventeurs:
• **FEYT, Nathalie,**
**8, chemin de Raphèle**
**F-13780 Cuges les Pins (FR)**
• **JOYE, Marc**
**F-83640 Saint Zacharie (FR)**
• **PAILLIER, Pascal**
**F-75020 Paris (FR)**
• **QUES-ROCHAT, Florence**
**F-92600 Asnières sur Seine (FR)**
• **VILLEGAS, Karine**
**F-13420 Gemenos (FR)**
• **CHEVALLIER-MAMES, Benoît**
**F-13260 Cassis (FR)**

(56) Documents cités:
**EP-A- 0 202 768      WO-A-98/52319**
**WO-A-99/35782**

• **BONEH D ET AL: "On the importance of checking cryptographic protocols for faults" ADVANCES IN CRYPTOLOGY - EUROCRYPT '97. INTERNATIONAL CONFERENCE ON THE THEORY AND APPLICATION OF CRYPTOGRAPHIC TECHNIQUES PROCEEDINGS, ADVANCES IN CRYPTOLOGY - EUROCRYPT '97. INTERNATIONAL CONFERENCE ON THE THEORY AND APPLICATION OF CRYPTOGRAPHIC TE, pages 37-51, XP002202745 1997, Berlin, Germany, Springer-Verlag, Germany ISBN: 3-540-62975-0 cité dans la demande**

**Description**

L'invention concerne un procédé de mise en oeuvre, dans un composant électronique, d'un algorithme de cryptographie.

L'invention se rapporte également au composant électronique correspondant.

De tels composants sont utilisés dans des applications où l'accès à des services ou à des données est sévèrement contrôlé. Ils ont une architecture formée autour d'un microprocesseur et de mémoires, dont une mémoire programme de type ROM ("Read Only Memory" en anglais) qui contient le(s) nombre(s) secret(s) d.

Ces composants sont utilisés dans des systèmes informatiques, embarqués ou non ; ils sont notamment utilisés dans les cartes à puce, pour certaines applications de celles-ci. Ce sont par exemple des applications d'accès à certaines banques de données, des applications bancaires, des applications de télépéage, par exemple pour la télévision, la distribution d'essence ou encore le passage de péages d'autoroutes.

Ces composants ou ces cartes mettent donc en oeuvre un algorithme de cryptographie pour assurer le chiffrement de données émises et/ou le déchiffrement de données reçues lorsque celles-ci doivent demeurer confidentielles.

De manière générale et succincte, ces algorithmes cryptographiques ont notamment pour fonction le chiffrement ou la signature numérique d'un message. A partir de ce message appliqué en entrée à la carte par un système hôte (serveur, distributeur bancaire...) et de nombreux secrets contenus dans la carte, la carte fournit en retour au système hôte le message chiffré ou signé, ce qui permet par exemple au système hôte d'authentifier le composant ou la carte, d'échanger des données, ....

Les caractéristiques des algorithmes de cryptographie sont connues : calculs effectués, paramètres utilisés. La seule inconnue est le ou les nombres secrets contenus en mémoire programme. Toute la sécurité de ces algorithmes de cryptographie tient dans ce (s) nombre(s) secret(s) contenu(s) dans la carte et inconnu(s) du monde extérieur à cette carte. Ce nombre secret ne peut être déduit de la seule connaissance du message appliqué en entrée et du message chiffré fourni en retour.

Or il est apparu que des attaques externes permettent à des tiers mal intentionnés de trouver le(s) nombre(s) secret(s) contenu(s) dans cette carte. Dans le domaine de la carte à puce, entre autres, il existe plusieurs attaques possibles, dont une dite "attaque par faute".

Dans ce type d'attaque, l'attaquant injecte une faute quelconque pendant le calcul d'un algorithme cryptographique, dans le but d'exploiter la présence de cette faute pour extraire une information secrète.

La faute peut aussi provenir d'une erreur de calcul due au matériel mettant en oeuvre l'algorithme cryptographique ; on considère néanmoins, dans un cas comme dans l'autre, qu'il s'agit d'une attaque par faute.

Ce type d'attaque est notamment envisageable avec l'algorithme RSA (du nom de ses auteurs Rivert, Shamir, Adleman), qui est celui le plus utilisé en cryptographie dans ce domaine d'application. La sécurité de l'algorithme RSA est basée sur la difficulté de factoriser de grands nombres. Ces algorithmes utilisent notamment des calculs d'exponentiation à la puissance d, d étant un nombre secret.

On rappelle brièvement les principales étapes de l'algorithme RSA.

On établit un nombre N qui est le produit de deux nombres premiers p et q (N=p.q), ainsi qu'un exposant public ou clé publique e et un exposant privé ou clé privée ou secrète d, satisfaisant la relation :

$$e.d = 1 \ (modulo \ \lambda(N)), \qquad (1)$$

$\lambda(.)$ étant la fonction de Carmichael.

Selon un premier mode de fonctionnement de l'algorithme RSA dit standard, les paramètres publics sont (N, e) et les paramètres privés sont (N,d). Etant donné x compris dans l'intervalle ]0,N[, l'opération publique sur x qui peut être par exemple le chiffrement du message x ou encore la vérification de la signature x, consiste à calculer :

$$y = x^e \ modulo \ N \qquad (2)$$

L'opération privée correspondante qui peut être par exemple le déchiffrement du message chiffré y ou la génération d'une signature x, consiste à calculer :

$$y^d \ modulo \ N \qquad (3)$$

avec x= y$^d$ modulo N puisque e.d = 1 (modulo $\lambda$(N)).

Dans ce contexte, le document EP-A-0 202 768 traite le problème de la compression d'une clé RSA. Ledit document décrit un procédé cryptographique comprenant les étapes consistant à choisir une valeur 'D3' parmi un nombre déterminé de valeurs et à tester si la valeur 'D3' choisie vérifie une relation prédéterminée. Si ceci n'est pas le cas, le procédé de EP-A-0 202 768 réitère les étapes précédentes en choisissant une autre valeur de 'D3'.

On va présenter un autre mode de fonctionnement dit mode CRT car basé sur le théorème des restes chinois ("Chinese Remainder Theorem" ou CRT en anglais) et quatre fois plus rapide que celui de l'algorithme RSA standard. Selon ce RSA mode CRT, on n'effectue pas directement les calculs modulo N mais on effectue d'abord les calculs modulo p et modulo q.

Les paramètres publics sont (N,e) mais les paramètres privés sont (p,q,d) ou (p, q, $d_p$, $d_q$, $i_q$) avec
$d_p$ = d modulo (p-1), $d_q$ = d modulo (q-1)
et $i_q$= q$^{-1}$ modulo p.

Par la relation (1), on obtient :

$$ed_p=1 \text{ modulo}(p-1) \text{ et } ed_q=1 \text{ modulo}(q-1) \quad (4)$$

L'opération publique s'effectue de la même façon que pour le mode de fonctionnement standard ; par contre pour l'opération privée, on calcule d'abord :

$$x_p = y^{d_p} \bmod p \qquad et \qquad x_q = y^{d_q} \bmod q$$

Ensuite, par application du théorème des restes chinois, on obtient x = y$^d$ mod N par :

$$x = CRT(x_p,x_q)=x_q+q[i_q(x_p-x_q)\text{modulo } p] \quad (5)$$

L'algorithme RSA a été présenté avec deux facteurs premiers p et q, pour simplifier l'exposé. On peut le généraliser au cas où N est le produit de deux entiers p et q tels que pgcd(p,q)=1. Dans ce cas,
$d_p$ = d (modulo $\lambda$(p)), $d_q$ = d (modulo $\lambda$(q)),
$i_q$ reste inchangé par rapport au cas précédent,
$ed_p$=1 (modulo $\lambda$(p)) et $ed_q$=1 (modulo $\lambda$(q)), et les calculs de $x_p$, $x_q$ et x sont inchangés.

Cette généralisation s'applique au mode standard comme au mode CRT.

On va à présent décrire un exemple d'attaque par faute basée sur l'obtention de deux signatures du même message, l'une correcte x et l'autre incorrecte notée ^x.

La signature incorrecte a par exemple été obtenue de la manière suivante. L'attaquant, par une méthode quelconque, injecte une erreur durant le calcul de $x_p$, mais pas durant celui de $x_q$. La valeur de $x_p$ est alors incorrecte et notée ^$x_p$. Par contre, la valeur de $x_q$ est correcte. De ce fait, lorsque l'on recombine les valeurs ^$x_p$ et $x_q$ en appliquant le théorème des restes chinois, la signature résultante ^x est incorrecte.

Il suffit alors à l'attaquant qui connaît bien sûr par ailleurs les paramètres publics (N,e), de calculer le plus grand commun diviseur (pgcd) avec N, soit :

$$pgdc(\text{^x} - x, N).$$

Or, pgdc(^x - x, N)= q. Il obtient alors le facteur secret q et donc p et $d_p$ et $d_q$. De ce fait, le code RSA est effectivement cassé.

Autrement dit, si quelqu'un est capable d'injecter une erreur quelconque durant un calcul modulo p alors que le calcul modulo q est correct ou réciproquement, il peut casser complètement le code RSA.

Il est également possible de casser le code RSA à partir d'une signature incorrecte d'un message connu. Plusieurs cas d'attaques par faute sont présentés dans la publication "On the Importance of Checking Cryptographic Protocols for Faults" de D. Boneh, R.A. DeMillo et R.J. Lipton, Advances in Cryptology-EUROCRYPT'97 pp.37-51, à laquelle on peut se reporter.

Une première contremesure pour éviter ce genre de scénario consiste à recalculer l'ensemble de l'algorithme. On compare les valeurs obtenues à l'issue des calculs successifs. S'ils sont identiques, on suppose qu'il n'y a pas eu d'erreur injectée. Un problème avec cette approche est qu'elle ne détecte pas une faute permanente. Par exemple, on ne peut déceler une attaque dans laquelle l'erreur injectée consiste à ce que la valeur d'un bit de mémoire soit toujours fixée à 0 ou à 1 ("sticky bit" en anglais).

Une autre contre-mesure à l'attaque par faute est décrite par Shamir dans le document brevet WO 98 52319.

On procède selon cette contre-mesure par l'algorithme suivant :

1. Choisir un nombre aléatoire r de faible valeur,
2. Calculer :

$$x_{rp} = y^d \text{ modulo } r.p,$$

et

$$x_{rq} = y^d \text{ modulo } r.q ;$$

3. Si $x_{rp} \neq x_{rq}$ (modulo r), alors il y a erreur, (peut-être induite par une attaque,) et donc interruption de l'algorithme, sinon ;
4. Appliquer le théorème des restes chinois à $x_{rp}$ et $x_{rq}$, pour émettre x en sortie.

On effectue ainsi respectivement les calculs modulo r.p et modulo r.q au lieu de modulo p et modulo q. Ensuite, on vérifie que les deux valeurs $x_{rp}$ et $x_{rq}$ obtenues par ces calculs sont égales modulo r. Si ces deux valeurs sont différentes, il est certain qu'il y a eu une erreur. Par contre, si elles sont égales, on peut supposer qu'il n'y a pas eu d'erreur, avec une probabilité de 1/r de se tromper dans cette supposition.

Un inconvénient de cette méthode est qu'elle est probabiliste, c'est-à-dire que les erreurs sont détectées avec une probabilité inférieure à 1 et que par conséquent, elles ne sont pas toutes détectées. En outre, elle est coûteuse en temps de calcul. Un autre inconvénient de la méthode Shamir est qu'elle ne fonctionne que pour le mode CRT. Or, il est également envisageable d'utiliser le mode standard de l'algorithme RSA.

La meilleure protection possible pour se protéger des attaques par faute consiste à vérifier que la valeur x obtenue lors de l'opération privée (3) ou (5) (c'est-à-dire soit en mode standard, soit en mode CRT de l'algorithme RSA), vérifie la relation (2) $y = x^e$ modulo N de l'opération publique. En effet, lorsque cette relation est vérifiée, on est assuré qu'il n'y a pas eu d'erreur pendant le déroulement de l'opération privée de l'algorithme RSA.

Mais le composant ou le dispositif mettant en oeuvre l'opération privée ne dispose pas toujours de l'exposant public e, notamment lorsqu'il n'exécute que l'opération privée.

Au vu de ce qui précède, l'invention propose un procédé permettant de réaliser certaines étapes d'un algorithme de cryptographie utilisant un exposant public e que l'on ne connaît pas a priori.

Ce procédé permet en particulier de réaliser une contre-mesure, notamment aux attaques par fautes, qui offre la meilleure protection possible même lorsqu'on ne connaît pas l'exposant public e.

L'invention a pour objet un procédé de mise en oeuvre, dans un composant électronique, d'un algorithme de cryptographie utilisant des moyens de calcul, ce procédé consistant à réaliser les étapes suivantes :

a) choisir une valeur possible de l'exposant public e parmi un nombre déterminé de valeurs $e_i$, $e_i$ étant des nombres entiers,
b) tester si la valeur $e_i$ choisie vérifie une relation prédéterminée:

- si c'est le cas, alors $e=e_i$, et mémoriser e en vue de son utilisation dans des calculs dudit algorithme de cryptographie,
- si ce n'est pas le cas, réitérer les étapes précédentes en choisissant une autre valeur de $e_i$ et, si aucune valeur de $e_i$ ne peut être attribuée à e, constater que les calculs dudit algorithme de cryptographie utilisant la valeur e ne peuvent être effectués.

Selon un mode de réalisation de l'invention, il consiste préalablement à l'étape b), à choisir une valeur Y comprise dans l'intervalle ]0,N[ et à attribuer à une valeur X le résultat de l'opération $Y^d$ modulo N, d et N étant des nombres entiers déterminés et il consiste en ce que la relation prédéterminée de l'étape b) est

$$X^{e_i} \bmod N = Y$$

On choisit de préférence Y=2.

L'algorithme de cryptographie peut être basé sur un algorithme de type RSA, notamment en mode standard ou en mode CRT.

Selon un autre mode de réalisation, la relation prédéterminée de l'étape b) est : $e_i d_p$=1 (modulo $\lambda(p)$), p et $d_p$ étant des nombres entiers déterminés et $\lambda(.)$ étant la fonction de Carmichael.

Le nombre $d_p$ peut être obtenu par $d_p$=d (modulo $\lambda(p)$), d étant un entier prédéterminé.

Selon une caractéristique de l'invention, $d_q$ et q étant des nombres entiers déterminés, avec pgcd(p,q)=1, l'étape b) consiste à réaliser les étapes suivantes :

tester si $e_i d_p$=1 (modulo $\lambda(p)$),

si c'est le cas, et si $e_i<\lambda(p)$, alors e=$e_i$ et mémoriser e en vue de son utilisation dans des calculs dudit algorithme de cryptographie,

si c'est le cas, et si $e_i \geq \lambda(p)$, alors tester si $e_i d_q$=1 (modulo $\lambda(q)$); si c'est le cas, alors e=$e_i$ et mémoriser e en vue de son utilisation dans des calculs dudit algorithme de cryptographie,

si l'un des deux tests précédents n'est pas vérifié, réitérer les étapes précédentes en choisissant une autre valeur de $e_i$ et si aucune valeur de $e_i$ ne peut être attribuée à e alors constater que les calculs dudit algorithme de cryptographie utilisant la valeur e ne peuvent être effectués.

Le nombre $d_q$ peut être obtenu par $d_q$=d (modulo $\lambda(q)$), d étant un entier prédéterminé.

L'algorithme de cryptographie est avantageusement basé sur un algorithme de type RSA en mode CRT.

On choisit de préférence $e_i$= $2^{16}$+1 ou $e_i$=3.

Selon une caractéristique de l'invention, une valeur $e_i$ ayant été attribuée à e, il consiste à obtenir à l'issue d'une opération privée de l'algorithme RSA, une valeur x à partir d'une valeur y et à ce que ledit calcul utilisant la valeur e consiste à vérifier si y = $x^e$ modulo N, N étant un nombre entier prédéterminé.

L'invention a aussi pour objet un composant électronique de sécurité, comprenant des moyens de calcul, une mémoire de programme et une mémoire de travail et des moyens de communication de données, caractérisé en ce qu'il met en oeuvre le procédé tel que précédemment décrit.

L'invention se rapporte en particulier à une carte à puce comprenant un composant électronique tel que décrit ci-dessus.

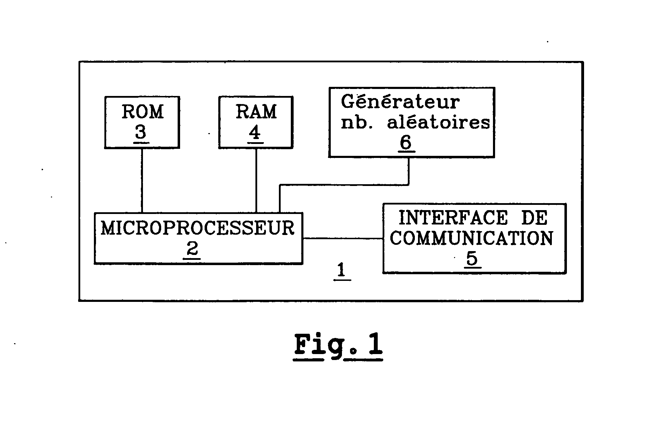

D'autres particularités et avantages de l'invention apparaîtront clairement à la lecture de la description faite à titre d'exemple non limitatif et en regard de la figure 1 annexée qui représente schématiquement les éléments d'une carte à puce apte à mettre en oeuvre l'invention.

Les modes de réalisation sont décrits dans le cadre de cartes à puce, mais peuvent bien entendu s'appliquer à tout autre dispositif ou composant électronique de sécurité doté de moyens de calculs cryptographiques.

Ainsi que le montre la figure 1, la carte à puce 1 comprend un microprocesseur 2 couplé à une mémoire figée (ROM) 3 et à une mémoire vive (RAM) 4, le tout formant un ensemble permettant, entre autres, l'exécution d'algorithmes cryptographiques. Plus précisément, le microprocesseur 2 comporte les moyens de calcul arithmétiques nécessaires à l'algorithme, ainsi que des circuits de transfert de données avec les mémoires 3 et 4. La mémoire figée 3 contient le programme exécutoire de l'algorithme cryptographique sous forme de code source, alors que la mémoire vive 4 comporte des registres pouvant être mis à jour pour le stockage de résultats des calculs.

La carte à puce 1 comporte aussi une interface de communication 5 reliée au microprocesseur 2 pour permettre l'échange de données avec l'environnement extérieur. L'interface de communication 5 peut être du type "à contacts", étant dans ce cas formée d'un ensemble de plots de contacts destinés à se connecter à un contacteur d'un dispositif externe, tel qu'un lecteur de cartes, et/ou du type "sans contact". Dans ce dernier cas, l'interface de communication 5 comporte une antenne et des circuits de communication par voie hertzienne permettant un transfert de données par liaison sans fil. Cette liaison peut aussi permettre un transfert d'énergie d'alimentation des circuits de la carte 1.

On va à présent décrire une méthode permettant de valider la valeur d'un exposant public e que l'on ne connaît pas a priori.

Elle est basée sur la constatation suivante : dans 90% des cas, la valeur de e est $e_0$=$2^{16}$+1, dans 5% des cas, la valeur de e est $e_i$=3 et dans les autres cas, la valeur de e est autre.

La méthode consiste alors à choisir $e_0$ et à vérifier que e=$e_0$ ; si e$\neq$$e_0$, alors on essaie avec $e_1$.

Il se peut que pour une certaine application correspondant aux 5% d'autres cas, e ne soit pas égal à $e_0$ ni à $e_1$. Aussi désigne-t-on plus généralement la valeur de e par $e_i$. Et la méthode consiste finalement à choisir une valeur $e_i$ parmi les $e_i$ envisagés et à vérifier que e=$e_i$.

Selon un premier mode de réalisation, valable pour les modes standard ou CRT de l'algorithme RSA :

on choisit arbitrairement une valeur Y comprise dans l'intervalle ]0, N[,

on choisit une valeur $e_i$,

on calcule $X = Y^d$ modulo N par (3) en mode standard ou par (5) en mode CRT

si $X^{e_i}$ mod N = Y alors $e = e_i$

et on mémorise e

sinon on choisit une autre valeur pour $e_i$.

On peut avantageusement choisir Y=2 de manière à accélérer le calcul d'exponentiation $Y^d$ qui apparaît dans la relation (3) ou (5) : cela revient alors à faire des additions au lieu de multiplications.

On décrit à présent un autre mode de réalisation basé sur la relation (4) ; il n'est valable qu'en mode CRT mais est alors plus efficace que le mode de réalisation précédent :

on choisit une valeur $e_i$,

on teste si $e_i d_p$=1 modulo (p-1), (ou si $e_i d_p$=1 (modulo $\lambda$(p)) dans le cas général)

si oui et si $e_i$<p (ou si $e_i$<$\lambda$(p) dans le cas général), alors $e=e_i$ et on mémorise e

si oui et si $e_i$≥p, (ou si $e_i$≥$\lambda$(p) dans le cas général) alors $e=e_i$ avec une très grande probabilité de l'ordre de 1-2/p.

Dans le cas où $e_i$≥p (ou si $e_i$≥$\lambda$(p) dans le cas général), l'ambiguïté peut être levée avec une probabilité égale à 1 en testant si $e_i d_q$=1 modulo (q-1) (ou si $e_i d_q$=1 (modulo $\lambda$(q)) dans le cas général). Si c'est le cas, $e=e_i$ et on mémorise e.

Cependant, dans la majorité des cas ($e_i$=$2^{16}$+1 ou $e_i$=3), $e_i$<p (ou $e_i$<$\lambda$(p) dans le cas général) car p a une taille de 512 bits ou plus.

Si l'un des tests n'est pas vérifié, on choisit une autre valeur pour $e_i$.

Si pour l'un ou l'autre mode de réalisation, il n'existe pas parmi les $e_i$, une valeur telle que $e=e_i$, alors on ne peut effectuer les calculs faisant intervenir e.

Lorsqu'on connaît e, par l'un ou l'autre de ces modes de réalisation, on peut alors vérifier chaque opération privée (3) ou (5) en s'assurant que $y=x^e$ modulo N ou plus généralement effectuer des calculs utilisant la valeur e qui est mémorisée.

Comme on l'a vu, ce procédé peut bien sûr être appliqué à une contre-mesure.

Il est plus rapide que la contre-mesure décrite dans l'état de la technique et qui consiste à recalculer l'ensemble de l'algorithme, c'est-à-dire à d'effectuer au moins un deuxième calcul d'exponentiation à la puissance d, d étant de la taille de N, et à comparer les valeurs obtenues à l'issue des calculs successifs. Le procédé selon l'invention consiste aussi à effectuer un deuxième calcul d'exponentiation mais à la puissance e ; or e est petit.

Il permet en outre de détecter une faute permanente.

Il s'applique aussi bien dans le cas du mode standard de l'algorithme RSA que dans le cas du mode CRT ainsi qu'à la généralisation de ces modes.

**Revendications**

1.  Procédé de mise en oeuvre, dans un composant électronique, d'un algorithme de cryptographie utilisant des moyens de calcul, **caractérisé en ce que** qu'il consiste à réaliser les étapes suivantes :

    a) choisir une valeur possible de l'exposant public e parmi un nombre déterminé de valeurs $e_i$, $e_i$ étant des nombres entiers,

    b) tester si la valeur $e_i$ choisie vérifie une relation prédéterminée:

    - si c'est le cas, alors $e=e_i$, et mémoriser e en vue de son utilisation dans des calculs dudit algorithme de cryptographie,
    - si ce n'est pas le cas, réitérer les étapes précédentes en choisissant une autre valeur de $e_i$ et, si aucune valeur de $e_i$ ne peut être attribuée à e, constater que les calculs dudit algorithme de cryptographie utilisant la valeur e ne peuvent être effectués.

2.  Procédé selon la revendication précédente, **caractérisé en ce que** préalablement à l'étape b), il consiste à choisir une valeur Y comprise dans l'intervalle ]0,N[ et à attribuer à une valeur X le résultat de l'opération $Y^d$ modulo N, d et N étant des nombres entiers déterminés et **en ce que** la relation prédéterminée de l'étape b) est

$$X^{e_i} \bmod N = Y$$

**3.** Procédé selon la revendication précédente, **caractérisé en ce que** Y=2.

**4.** Procédé selon l'une quelconque des revendications précédentes, **caractérisé en ce que** l'algorithme de cryptographie est basé sur un algorithme de type RSA.

**5.** Procédé selon la revendication précédente, **caractérisé en ce que** l'algorithme de type RSA est en mode standard ou en mode CRT.

**6.** Procédé selon la revendication 1, **caractérisé en ce que** la relation prédéterminée de l'étape b) est : $e_i d_p$=1 (modulo $\lambda(p)$) , p et $d_p$ étant des nombres entiers déterminés et $\lambda(.)$ étant la fonction de Carmichael.

**7.** Procédé selon la revendication précédente, **caractérisé en ce que** $d_p$=d (modulo $\lambda(p)$), d étant un entier prédéterminé.

**8.** Procédé selon l'une quelconque des revendications 6 ou 7, **caractérisé en ce que**, $d_q$ et q étant des nombres entiers déterminés, avec pgcd(p,q)=1, l'étape b) consiste à réaliser les étapes suivantes :
tester si $e_i d_p$=1 (modulo $\lambda(p)$),
si c'est le cas, et si $e_i <\lambda,(p)$, alors e=$e_i$ et mémoriser e en vue de son utilisation dans des calculs dudit algorithme de cryptographie,
si c'est le cas, et si $e_i \geq \lambda(p)$, alors tester si $e_i d_q$=1 (modulo $\lambda(q)$); si c'est le cas, alors e=$e_i$ et mémoriser e en vue de son utilisation dans des calculs dudit algorithme de cryptographie,
si l'un des deux tests précédents n'est pas vérifié, réitérer les étapes précédentes en choisissant une autre valeur de $e_i$ et si aucune valeur de $e_i$ ne peut être attribuée à e alors constater que les calculs dudit algorithme de cryptographie utilisant la valeur e ne peuvent être effectués.

**9.** Procédé selon la revendication précédente **caractérisé en ce que** $d_q$=d (modulo $\lambda(q)$), d étant un entier prédéterminé.

**10.** Procédé selon l'une quelconque des revendications 6 à 9, **caractérisé en ce que** l'algorithme de cryptographie est basé sur un algorithme de type RSA en mode CRT.

**11.** Procédé selon l'une quelconque des revendications précédentes, **caractérisé en ce que**

$$e_i = 2^{16}+1.$$

**12.** Procédé selon l'une quelconque des revendications 1 à 10, **caractérisé en ce que** $e_i$=3.

**13.** Procédé selon l'une quelconque des revendications précédentes et selon lequel une valeur $e_i$ a été attribuée à e, **caractérisé en ce qu'**il consiste à obtenir à l'issue d'une opération privée de l'algorithme RSA, une valeur x à partir d'une valeur y et **en ce que** ledit calcul utilisant la valeur e consiste à vérifier si y = $x^e$ modulo N, N étant un nombre entier prédéterminé.

**14.** Composant électronique de sécurité, comprenant des moyens de calcul (2), une mémoire de programme (3) et une mémoire de travail (4) et des moyens de communication de données (5), **caractérisé en ce qu'**il comprend des moyens aptes à mettre en oeuvre le procédé selon l'une quelconque des revendications précédentes.

**15.** Carte à puce comprenant un composant électronique selon la revendication précédente.

**Claims**

**1.** Method of implementing, in an electronic component, a cryptography algorithm using calculation means, **charac-**

**terised in that** it consists of performing the following steps:

a) choosing a possible value of the public exponent e from among a given number of values $e_i$, $e_i$ being integers,
b) testing if the chosen value $e_i$ verifies a predetermined relation:

- if this is the case, then $e=e_i$, and e is saved with a view to using it in the calculations of said cryptography algorithm,
- if this is not the case, the preceding steps are repeated, choosing another value of $e_i$ and, if none of the values of $e_i$ can be assigned to e, it is established that the calculations of said cryptography algorithm using the value e cannot be performed.

2. Method according to the preceding claim, **characterised in that**, prior to step b), it consists of choosing a value Y comprised in the interval ]0,N[ and of assigning to a value X the result of the operation $Y^d$ modulo N, d and N being given integers and **in that** the predetermined relation of step b] is

$$X^{ei} \bmod N = Y$$

3. Method according to the preceding claim, **characterised in that** Y=2.

4. Method according to any one of the preceding claims, **characterised in that** the cryptography algorithm is based on an RSA algorithm.

5. Method according to the preceding claim, **characterised in that** the RSA algorithm is in standard mode or in CRT mode.

6. Method according to claim 1, **characterised in that** the predetermined relation of step b) is $e_i d_p=1$ (modulo $\lambda(p)$), p and $d_p$ being given integers and $\lambda(.)$ being the Carmichael function.

7. Method according to the preceding claim, **characterised in that** $d_p=d$ (modulo $\lambda(p)$), d being a predetermined integer.

8. Method according to either one of the claims 6 or 7, **characterised in that**, $d_q$ and q being given integers, with gcd (p, q) =1, step b) consists of performing the following steps:
testing if $e_i d_p=1$ (modulo $\lambda(p)$),
if this is the case, and if $e_i<\lambda(p)$, then $e=e_i$ and e is saved with a view to using it in the calculations of said cryptography algorithm,
if this is the case, and if $e_i$ (((p), then testing if eidq=1 (modulo ((q)); if this is the case, then e=ei and e is saved with a view to using it in the calculations of said cryptography algorithm,
if either of the two preceding tests is not verified, the preceding steps are repeated choosing another value of ei and, if none of the values of ei can be assigned to e, it is established that the calculations of said cryptography algorithm using the value e cannot be performed.

9. Method according to the preceding claim, **characterised in that** dq=d (modulo ((q)), d being a predetermined integer.

10. Method according to any one of the claims from 6 to 9, **characterised in that** the cryptography algorithm is based on an RSA algorithm in CRT mode.

11. Method according to any one of the preceding claims, **characterised in that**

$$ei= 216+1$$

12. Method according to any one of the claims from 1 to 10, **characterised in that** ei=3.

13. Method according to any one of the preceding claims and according to which a value ei has been assigned to e, **characterised in that** it consists of obtaining, at the end of a private operation of the RSA algorithm, a value x from a value y and **in that** said calculation using the value e consists of verifying if y = xe modulo N, N being a given integer.

14. Electronic security component, comprising calculation means (2), a program memory (3) and a working memory (4) and data communication means (5), **characterised in that** it comprises means capable of implementing the method according to any one of the preceding claims.

15. Chip card comprising an electronic component according to the preceding claim.

**Patentansprüche**

1. Umsetzungsverfahren, in einem elektronischen Bauteil, eines Verschlüsselungsalgorithmus unter Verwendung von Rechenmitteln, **dadurch gekennzeichnet, dass** es in der Durchführung der folgenden Schritte besteht:

   a) Wählen eines möglichen Werts des öffentlichen Exponenten e unter einer bestimmten Anzahl von Werten $e_i$, wobei $e_i$ ganze Zahlen sind,
   b) Testen, ob der gewählte Wert $e_i$ eine vorbestimmte Beziehung bestätigt,

   - ist dies der Fall, also $e=e_i$, e für seine Verwendung in den Berechnungen des genannten Verschlüsselungsalgorithmus speichern,
   - ist dies nicht der Fall, die vorherigen Schritte wiederholen und für $e_i$ einen anderen Wert wählen, und wenn e kein anderer Wert $e_i$ zugeordnet werden kann, feststellen dass die Berechnungen des genannten Verschlüsselungsalgorithmus unter Verwendung des Werts e nicht durchgeführt werden können.

2. Verfahren gemäß dem vorherigen Anspruch, **dadurch gekennzeichnet, dass** man vor dem Schritt b) einen Wert Y innerhalb des Intervalls ]O,N[ wählt und das Ergebnis der Operation $Y^d$ Modulo N einem Wert X zuweist, wobei d und N bestimmte ganze Zahlen sind, und dass die vorbestimmte Beziehung des Schritts b)

$$X^{ei} \; Mod \; N \; = \; Y \; ist.$$

3. Verfahren gemäß dem vorherigen Anspruch, **dadurch gekennzeichnet, dass** Y=2 ist.

4. Verfahren gemäß einem der vorherigen Ansprüche, **dadurch gekennzeichnet, dass** der Verschlüsselungsalgorithmus auf einem Algorithmus des Typs RSA beruht.

5. Verfahren gemäß dem vorherigen Anspruch, **dadurch gekennzeichnet, dass** der Algorithmus des Typs RSA im Standard-Modus oder im CRT-Modus ist.

6. Verfahren gemäß Anspruch 1, **dadurch gekennzeichnet, dass** die vorbestimmte Beziehung des Schritts b) $e_i dp=1$ (Modulo A.(p)) lautet, wobei p und dp bestimmte ganze Zahlen sind und M.) die Carmichael-Funktion ist.

7. Verfahren gemäß dem vorherigen Anspruch, **dadurch gekennzeichnet, dass** dp=d (Modulo k(p) ist, wobei d eine vorbestimmte ganze Zahl ist.

8. Verfahren gemäß einem der Ansprüche 6 oder 7, **dadurch gekennzeichnet, dass**, wobei $d_q$ und q bestimmte ganze Zahlen sind, mit pgcd (p, q) =1, der Schritt b) in der Durchführung der folgenden Schritte besteht:
   testen, ob $e_i d_p=1$ (Modulo $\lambda$ (p)),
   ist dies der Fall, und wenn $e_i<\lambda(p)$, dann $e=e_1$ und e speichern für seine Verwendung in den Berechnungen des genannten Verschlüsselungsalgorithmus,
   ist dies der Fall, und wenn $e_i \geq \lambda(p)$, dann testen, ob $e_i d_q=1$ (Modulo $\lambda(q)$); ist dies der Fall, dann $e=e_i$ und e speichern für seine Verwendung in den Berechnungen des genannten Verschlüsselungsalgorithmus,
   wird einer beiden vorgenannten Tests nicht bestätigt, die vorherigen Schritte durch Wählen eines anderen Werts $e_i$ wiederholen, und wenn e kein anderer Wert $e_i$ zugeordnet werden kann, feststellen dass die Berechnungen des genannten Verschlüsselungsalgorithmus unter Verwendung des Werts e nicht durchgeführt werden können.

9. Verfahren gemäß dem vorherigen Anspruch, **dadurch gekennzeichnet, dass** $d_q=d$ (Modulo $\lambda(q)$ ist, wobei d eine vorbestimmte ganze Zahl ist.

**10.** Verfahren gemäß einem der Ansprüche 6 bis 9, **dadurch gekennzeichnet, dass** der Verschlüsselungsalgorithmus auf einem Algorithmus des Typs RSA im CRT-Modus beruht.

**11.** Verfahren gemäß einem der vorherigen Ansprüche, **dadurch gekennzeichnet, dass**

$$e_i = 2^{16}+1 \text{ ist.}$$

**12.** Verfahren gemäß einem der Ansprüche 1 bis 10, **dadurch gekennzeichnet, dass** $e_i=3$ ist.

**13.** Verfahren gemäß einem der vorherigen Ansprüche und gemäß dem e ein Wert $e_1$ zugeordnet ist, **dadurch gekennzeichnet, dass** es darin besteht (N.d.t.: *je ne comprends pas la suite de cette phrase),* und dass die besagte, den Wert e verwendende Berechnung in der Prüfung besteht, dass $y = x^e$ Modulo N ist, wobei N eine vorbestimmte ganze Zahl ist.

**14.** Elektronisches Sicherheitsbauteil, mit Rechenmitteln (2), einem Programmspeicher (3) und einem Arbeitsspeicher (4) sowie Datenkommunikationsmitteln (5), **dadurch gekennzeichnet, dass** es Mittel für die Umsetzung des Verfahrens gemäß einem der vorherigen Ansprüche umfasst.

**15.** Chipkarte mit einem elektronischen Bauteil gemäß dem vorherigen Anspruch.

**Fig. 1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0202768 A

- WO 9852319 A

**Littérature non-brevet citée dans la description**

- **D. BONEH ; R.A. DEMILLO ; R.J. LIPTON.** On the Importance of Checking Cryptographic Protocols for Faults. *Advances in Cryptology-EUROCRYPT'97,* 37-51